# EUROPÄISCHE PATENTSCHRIFT

(11) **EP 3 401 520 B1**
(45) Veröffentlichungstag und Bekanntmachung des Hinweises auf die Patenterteilung: **08.07.2020**
(21) Anmeldenummer: 18170739.9
(22) Anmeldetag: 04.05.2018
(51) Int. Cl.: F02B 31/08, F02D 13/02, F01L 13/00, F02B 31/00, F01L 1/053, F02D 41/00

(54) **VERBRENNUNGSKRAFTMASCHINE MIT VORRICHTUNG ZUR STRÖMUNGSBEEINFLUSSUNG EINES REAKTIONSGASES IM BRENNRAUM**
INTERNAL COMBUSTION ENGINE WITH DEVICE FOR CONTROLLING AIRFLOW OF A REACTION GAS IN THE COMBUSTION CHAMBER
MOTEUR À COMBUSTION INTERNE AVEC DISPOSITIF D'INFLUENCE DE FLUX DE GAZ D'UN GAZ RÉACTIONNEL DANS LA CHAMBRE DE COMBUSTION

(30) Priorität: 10.05.2017 DE 102017207917
(43) Veröffentlichungstag der Anmeldung: 14.11.2018
(73) Patentinhaber: VOLKSWAGEN AKTIENGESELLSCHAFT, 38440 Wolfsburg (DE)
(72) Erfinder: Groenendijk, Axel, 38518 Gifhorn (DE)

(56) Entgegenhaltungen:
- EP-A1- 0 391 739
- EP-A1- 0 470 869
- DE-A1-102005 006 489
- DE-A1-102011 054 218
- DE-A1-102014 012 808

## Beschreibung

Die Erfindung betrifft eine Vorrichtung zur Beeinflussung des Strömungsverhaltens eines Reaktionsgases, welches im Betrieb einer zumindest zwei Zylinder aufweisenden Verbrennungskraftmaschine in einen Brennraum der Zylinder zuführbar ist. Hierbei weist jeder der Zylinder eine Einlasseinrichtung zur Zufuhr des Reaktionsgases auf, wobei der Einlasseinrichtung mindestens ein in zumindest einen Verwirbelungskanal und einen Füllungskanal unterteilbarer Einlasskanal sowie zumindest zwei am und/oder im jeweiligen Zylinder angeordnete Einlassventile zugeordnet sind. Hierbei sind je zwei unmittelbar benachbarte Zylinder der Verbrennungskraftmaschine ausschließlich einem Zylinderpaar zugeordnet, sodass ein einem Zylinderpaar zugeordneter Zylinder keinem weiteren Zylinderpaar zugeordnet ist. Dabei weist die Verbrennungskraftmaschine zudem je Zylinderpaar einen durch höchstens ein Stellglied betätigbaren, variablen Einlassventiltrieb auf, wobei der variable Einlassventiltrieb durch ein auf einer Einlassnockenwelle drehfest und axialverschieblich angeordnetes Nockenstück ausgeformt ist. Ferner weist das Nockenstück hierbei zumindest zwei Nocken zum Betätigen der Einlassventile mit zumindest zwei verschiedenen und axial aufeinanderfolgend ausgebildeten Nockenkonturen auf, wobei die Betätigung des variablen Einlassventiltriebes in axiale Richtung der Einlassnockenwelle mittels des Stellgliedes durch Zusammenwirken des Stellgliedes mit einer an dem Nockenstück ausgeformten Kulisse, aufweisend zumindest eine in axiale Richtung der Einlassnockenwelle wirkende Kulissenbahn, ausführbar ist.

Eine Herausforderung des modernen Kraftfahrzeugbaus besteht in dem hehren Ziel, den Kraftstoffverbrauch und mit diesem verbunden den Schadstoffausstoß eines im Kraftfahrzeuges vorhandenen Verbrennungsmotors stetig zu minimieren. Neben der Reduzierung des Kohlenstoffdioxidausstoßes betrifft dies, insbesondere bei Brennkraftmaschinen, die auf der Verbrennung von Dieselkraftstoff basieren, die Reduzierung des Ruß- sowie Stickoxidausstoßes.

Die Maßnahmen betreffend der Reduzierung des Schadstoffausstoßes sind hierbei vielfältiger Natur und betreffen neben der nachmotorischen Abgasnachbehandlung in Form von Partikelfiltern sowie Oxidations- und Stickoxidkatalysatoren auch innermotorische Vorgänge wie den Verbrennungsvorgang im Zylinder des Verbrennungsmotors an sich.

Hierbei ist gerade im Teillastbereich eines solchen Motors zur Verringerung des Schadstoffausstoßes und des Kraftstoffverbrauches eine gute Durchmischung von Luft und Kraftstoff vorteilhaft. Dies kann bei Verbrennungsmotoren mit mindestens zwei Einlasskanälen und somit mindestens zwei Einlassventilen dadurch erreicht werden, dass die Einlasskanäle verschieden ausgestaltet werden und einer der Einlasskanäle durch eine in dem Einlasskanal angeordnete Drallklappe verschließbar ausgestaltet ist. Aufgrund der Formgebung der Einlasskanäle und der durch den Verschluss eines der Kanäle asymmetrisch verteilten Luftmenge entsteht innerhalb des Brennraumes ein Drall der Luftströmung und somit eine stärkere Verwirbelung, die die Vermischung von Luft und Kraftstoff insbesondere im niedrigen Drehzahlbereich erhöht.

Die DE 10 2007 053 890 A1 beschreibt in diesem Zusammenhang einen Dieselmotor sowie ein Verfahren zum Betrieb eines solchen Dieselmotors zur Reduzierung der Ruß- und Stickoxidemissionen des Motors. Dabei ist vorgesehen, dass zum einen das im Drallkanal sitzende Einlassventil eine Drall-erhöhende Gestaltung aufweist und zum anderen die in einem Füllkanal angeordnete Drallklappe zur Einstellung verschiedener Rußzahlen in Abhängigkeit von Ventilhüben kleiner der Hälfte des Maximalventilhubes sowie unterschiedlichen Betriebszuständen sich unterscheidende Öffnungsraten aufweist.

In der DE 198 33 325 A1 ist eine zu der Offenbarung der DE 10 2007 053 890 A1 gleichartig ausgebildete Anordnung beschrieben, wobei zusätzlich zur Drallklappe im Füllkanal eine einen Abgasrückführkanal verschließende Schaltklappe im Ansaugtrakt des Verbrennungsmotors vorgesehen ist, um ein Übersprechen von Druckimpulsen zwischen den Zylindern des Verbrennungsmotors zu vermeiden. Dies erhöht die Komplexität des Ansaugtraktes und somit die Fehleranfälligkeit der Anordnung.

Die Verwendung solcher Drallklappen ist hierbei mit Nachteilen dahingehend verbunden, dass einerseits trotz eines vorgegebenen Sollverschlusses des Füllkanals stets eine Leckströmung durch den Füllkanal entsteht. Andererseits ist die Anwendung von Drallklappen mit einem deutlich erhöhten konstruktiven Aufwand des Ansaugtraktes des Verbrennungsmotors und somit der Steigerung der Fehleranfälligkeit verbunden.

Der DE 10 2011 054 218 A1 ist zudem ein variabler Ventiltrieb eines Verbrennungsmotors zu entnehmen, bei welchem einzelne auf jeweils einer Nockenwelle angeordnete Nockenstücke über eine Schubstange miteinander längsverschieblich wirkverbunden sind. Hierbei betätigen die auf den Nockenstücken längsverschieblich angeordneten Nocken stets beide Gaswechselventile eines Zylinders.

Ein weiterer variabler Ventiltrieb eines Verbrennungsmotors wird ferner durch die EP 0 470 869 A1 beschrieben, wobei dieser mit beiden Einlassventilen eines Zylinders verbunden ist.

Der EP 0 391 739 A1 ist ein Verbrennungsmotor mit einem Einlassventiltrieb zu entnehmen, wobei dieser aus einer Nockenwelle sowie einer mit der Nockenwelle zusammenwirkenden und parallel zu dieser angeordneten Kipphebelwelle besteht. Hierbei sind auf der Nockenwelle drei Nocken angeordnet, wobei jeder der Nocken eine einzelne Nockenkontur aufweist, die sich von Nocken zu Nocken unterscheidet. Die Kipphebelwelle weist ihrerseits drei Kipphebel auf, wobei lediglich zwei der Kipphebel auf die Einlassventile wirken. Weiterhin weist die Kipphebelwelle einen hydraulisch betätigbaren Schaltmechanismus, respektive in zweiter Ausführungsform zwei hydraulisch betätigbare Schaltmechanismen auf. Die Schaltmechanismen weisen ihrerseits gegen Rückstellfedern verschiebbare Verbindungselemente auf, welche bei teils unterschiedlich hohem, auf die Verbindungselemente wirkendem Hydraulikdruck einer Verschiebung unterliegen und hierdurch Nocken unterschiedlicher Nockenkonturen in Eingriff mit den Einlassventilen bringbar sind. Stets wirkt dabei wenigstens ein Nocken des variablen Einlassventiltriebs auf beide Einlassventile eines Zylinders.

Auch der DE 10 2014 012 808 A1 ist ein Einlassventiltrieb zu entnehmen, wobei dieser einem Zylinderpaar mit zwei Zylindern zugeordnet und zudem durch höchstens ein Stellglied betätigbar ist. Hierbei werden durch den Einlassventiltrieb beide Einlassventile je Zylinder über die jeweils zwei Nockenkonturen aufweisenden Nocken des Einlassventiltriebs betätigt.

Die DE 10 2005 006 489 A1 offenbart ebenfalls einen Einlassventiltrieb, welcher jeweils einem Zylinderpaar mit zwei Zylindern zugeordnet ist. Die jeweils zwei Nockenkurven aufweisenden Nocken sind an einem Nockenträger angeordnet, wobei die Verstellung eines jeweiligen Nockenträgers mittels zweier Stellglieder erfolgt. Zur Verschiebung des Nockenträgers und somit der Nocken benachbarter Zylinder wirkt zur Links- sowie zur Rechtsverstellung jeweils ein Stellglied auf jeweils eine Schaltkulisse ein. Zudem werden wiederum beide Einlassventile des Einlasskanals durch den variablen Einlassventiltrieb betätigt.

Vor diesem Hintergrund liegt der Erfindung die Aufgabe zugrunde, die Vorrichtung der eingangs genannten Art derart auszuführen, dass eine Leckströmung durch den Füllungskanal sowie der konstruktive Aufwand der Einlasseinrichtung der Verbrennungskraftmaschine und dadurch die Fehleranfälligkeit der Vorrichtung minimiert wird.

Diese Aufgabe wird gelöst mit einer Vorrichtung gemäß den Merkmalen des Patentanspruches 1. Die Unteransprüche betreffen besonders zweckmäßige Weiterbildungen der Erfindung.

Erfindungsgemäß ist also eine Vorrichtung zur Beeinflussung des Strömungsverhaltens eines Reaktionsgases vorgesehen, welches im Betrieb einer zumindest zwei Zylinder aufweisenden Verbrennungskraftmaschine in einen Brennraum der Zylinder zuführbar ist. Hierbei weist jeder der Zylinder eine Einlasseinrichtung zur Zufuhr des Reaktionsgases auf, wobei der Einlasseinrichtung mindestens ein in zumindest einen Verwirbelungskanal und einen Füllungskanal unterteilbarer Einlasskanal sowie zumindest zwei am und/oder im jeweiligen Zylinder angeordnete Einlassventile zugeordnet sind. Darüber hinaus ist es möglich, dass jeder Zylinder ebenso eine Kraftstoffzuführeinrichtung zur direkten Zufuhr eines Kraftstoffes in den Brennraum des Zylinders aufweist. Einfindungsgemäß sind weiterhin je zwei unmittelbar benachbarte Zylinder der Verbrennungskraftmaschine ausschließlich einem Zylinderpaar zugeordnet. Die Verbrennungskraftmaschine weist hierbei je Zylinderpaar einen durch höchstens ein Stellglied betätigbaren, variablen Einlassventiltrieb auf, durch welchen je genau ein Einlassventil der Einlassventile pro Zylinder des Zylinderpaares Ventilhub-veränderlich betätigbar ist. Dabei sind die durch den variablen Einlassventiltrieb betätigten Einlassventile im Füllungskanal angeordnet und als den Füllungskanal vom Brennraum des Zylinders trennende Füllungskanal-Einlassventile ausgebildet. Denkbar ist hierbei, dass der Ventilhub je eines Einlassventiles pro Zylinder des Zylinderpaares zwischen einem Nullhub und einem Maximalhub des Einlassventiles veränderbar ist. Ein Nullhub würde in diesem Sinne einer Ventilabschaltung des Einlassventiles aufgrund einer Nichtauslenkung des Einlassventiles aus seinem Ventilsitz, der Maximalhub einer Maximalauslenkung des Einlassventiles aus seinem Ventilsitz entsprechen.

Mittels der erfindungsgemäßen Vorrichtung wird es gestaltungsgemäß ermöglicht, eine Erhöhung der Vermischung eines Brenngasgemisches aus dem Reaktionsgas, welches insbesondere Luft ist, und beispielsweise eines Kraftstoffes, wie Diesel oder Benzin, im Brennraum der Zylinder der Verbrennungskraftmaschine zu erreichen. Dies wirkt sich insbesondere im Teillastbereich der Verbrennungskraftmaschine in vorteilhafter Weise mindernd auf den Kraftstoffverbrauch sowie den Schadstoffausstoß aus.

Hierdurch ist es möglich, Mechanismen zur Erhöhung der Vermischung des Brenngasgemisches, welche beispielsweise auf der Anordnung einer Drallklappe, welche ebenso als Swirlklappe bekannt ist, sowie einer Tumbleklappe, auch bekannt als Ladungsbewegungsklappe, in dem Füllungskanal und/oder dem Einlasskanal zu ersetzen. Auf einer solchen Basis kann vorteilhaft auf die Anordnung und somit die Verwendung einer Drallklappe oder Tumbleklappe zur Erhöhung der Vermischung verzichtet werden.

Der Einlasskanal kann wie beschrieben in einen Verwirbelungskanal und einen Füllungskanal zweigeteilt ausgeführt sein. Denkbar ist hierbei die Ausbildung des Verwirbelungskanals in Form eines Drallkanals oder eines Tumblekanals. Denkbar ist jedoch ebenso Ausgestaltung als ein nicht unterteilter Einlasskanal, welcher aufgrund dessen Ausgestaltung die Funktion des Verwirbelungskanals sowie des Füllungskanals in einer einteilig ausgeführten Form erfüllt.

Die Verbrennungskraftmaschine, welche z. B. als ein selbst- oder fremdgezündeter Hubkolben-Verbrennungsmotor eines Kraftfahrzeuges ausgebildet ist, weist wie bereits erwähnt zumindest zwei Zylinder auf, wobei je zwei unmittelbar benachbarte Zylinder ausschließlich einem Zylinderpaar zugeordnet sind. Diese ausschließliche Zuordnung bedingt somit erfindungsgemäß, dass ein einem Zylinderpaar zugeordneter Zylinder keinem weiteren Zylinderpaar zugeordnet ist. Die Zylinderpaare verfügen also untereinander über keine einer Schnittmenge zugehörigen Zylinder.

Erfindungsgemäß ist der variable Einlassventiltrieb weiterhin durch ein auf einer Einlassnockenwelle drehfest und axialverschieblich angeordnetes Nockenstück ausgeformt, wobei das Nockenstück zumindest zwei Nocken zum Betätigen der Einlassventile mit zumindest zwei verschieden und axial aufeinanderfolgend ausgebildeten Nockenkonturen aufweist. Hierbei können die zu betätigenden Einlassventile eines Zylinderpaares mittels einer solchen Ausgestaltung vorteilhaft über lediglich ein Stellglied betätigt werden, wobei die Betätigung auch im Sinne eines Nullhubes, also quasi keiner Betätigung, liegen kann. Aufgrund der gegenüber der Einlassnockenwelle drehfest ausgestalteten Verbindung des Nockenstückes erfolgt im Betrieb der Verbrennungskraftmaschine eine relativ zur Nockenwelle gleichartige Rotation der Nockenstücke sowie der an den Nockenstücken ausgeformten Nocken. Die Nocken können hierbei zueinander eine relative Phasenlage und/oder eine entsprechende relative Winkellage aufweisen, wodurch sich gezielt unterschiedliche Steuerzeiten der zu betätigenden Einlassventile der jeweiligen Zylinder eines Zylinderpaares einstellen ließen. Die Veränderung des Ventilhubes der Einlassventile kann durch die axiale Verschiebung der Nockenstücke und somit der Nocken erfolgen, wodurch die Nocken über jeweils eine der sich voneinander unterscheidenden Nockenkonturen auf die zu betätigenden Einlassventile wirken. Hierbei könnte ein Schaltvorgang zwischen den einzelnen Nockenkonturen, also das Verschieben der Nockenstücke, stets im Nockengrundkreis der Nockenkontur, d. h. bei Nullhub und somit in der Hochdruckphase des Zylinders erfolgen.

Ferner ist die Betätigung des variablen Einlassventiltriebes in axiale Richtung der Einlassnockenwelle mittels des Stellgliedes erfindungsgemäß durch Zusammenwirken des Stellgliedes mit einer an dem Nockenstück ausgeformten Kulisse, aufweisend zumindest eine in axiale Richtung der Nockenwelle wirkende Kulissenbahn, ausführbar. Hierdurch wäre neben dem Stellglied beispielsweise lediglich ein oder mehrere zusätzliche Betätigungselemente von Nöten, um die axiale Verschiebung der Nockenstücke zu erreichen. Ein solches Betätigungselement könnte hierbei zumindest einen Betätigungsstift, bevorzugt mehrere Betätigungsstifte, z. B. zwei oder drei Betätigungsstifte aufweisen, welche sich dazu eignen, in die Kulissenbahnen der Kulisse selektiv einzugreifen. Hierdurch und aufgrund der Drehbewegung der Nockenwelle und somit der Nockenstücke ließen sich die Nockenstücke axial verschieben. Das Eingreifen der Betätigungsstifte in die Kulissenbahnen ließe sich dabei durch eine radiale Zustellung der Betätigungsstifte über das Stellglied realisieren. Die Kulissenbahnen der Kulisse an sich wären im einfachsten Falle z. B. als teilweise oder vollständig umlaufende Nuten innerhalb eines Stellabschnittes der Nockenstücke ausgebildet, wobei diese in Umfangsrichtung gerade und/oder gekrümmt verlaufende Nutenabschnitte aufweisen können.

Als indes besonders praxisgerecht stellt sich eine Weiterbildung dar, bei welcher im Falle einer ungeraden Anzahl an Zylindern der Verbrennungskraftmaschine die Verbrennungskraftmaschine für den keinem Zylinderpaar zuordenbaren Zylinder einen durch höchstens ein Stellglied betätigbaren variablen Einlassventiltrieb aufweist, durch welchen ein Einlassventil des dem keinen Zylinderpaar zuordenbaren Zylinders Ventilhub-veränderlich betätigbar ist. Durch die Anordnung eines variablen Ventiltriebes, welcher nicht an die Zuordnung zu einem Zylinderpaar, sondern lediglich an die Zuordnung zu einem Zylinder gebunden ist, ist es möglich, dass bei der Ausgestaltung der Verbrennungskraftmaschine mit einer ungeraden Anzahl an Zylindern in allen Zylindern der Verbrennungskraftmaschine eine Erhöhung der der Vermischung des Reaktionsgases und eines Kraftstoffes, insbesondere im Teillastbereich, ermöglicht wird. Eine gegebenenfalls über die Zylinder der Brennkraftmaschine inhomogene und unvorteilhafte Brenngasgemischbildung kann somit gewinnbringend vermieden werden.

Sind zudem die durch den variablen Einlassventiltrieb betätigten Einlassventile im Füllungskanal oder eines den Füllungskanal bildenden Teil des Einlasskanals angeordnet und als den Füllungskanal vom Brennraum des Zylinders trennende Füllungskanal-Einlassventile ausgebildet, so lässt sich gewinnbringend auf die Anordnung einer Drall- oder Tumbleklappe im Füllungskanal verzichten, zudem jedoch durch den Verschluss des Füllungskanals durch die Nichtöffnung oder lediglich teilweise Öffnung des in dem Füllungskanal angeordneten Einlassventils eine Erhöhung der Vermischung des Brenngasgemisches im Brennraum der Zylinder zu erreichen. Dies begründet sich darin, dass hierdurch der Volumenstrom des Reaktionsgases durch den Verwirbelungskanal erhöht wird, dessen Formgebung eine spiralförmige Strömung des Volumenstromes im Brennraum der Zylinder hervorruft.

Auch liegt eine erfolgversprechende Ausführungsform der Erfindung darin begründet, dass eines der durch den variablen Einlassventiltrieb betätigten Einlassventile der unmittelbar benachbarten Zylinder des Zylinderpaares die in und/oder an den Zylindern einander zugewandt angeordneten Einlassventile sind. Hierdurch liegt pro Zylinderpaar eine quasi spiegelbildliche Anordnung der zu betätigenden Einlassventile und der den Zylindern zugeordneten Einlasseinrichtungen, denen entsprechend die Einlassventile zugeordnet sind, vor. Dies bietet in vorteilhafter Weise eine konstruktiv durchdachte Möglichkeit die der Betätigung der Einlassventile dienenden variablen Einlassventiltriebe mittels jeweils lediglich eines Stellgliedes zu betätigen. In diesem Zusammenhang könnte beispielsweise eine Anordnung des Stellgliedes mittig, zwischen den Zylindern eines Zylinderpaares, angedacht sein.

Ist eine Ausgestaltung der erfindungsgemäßen Vorrichtung ferner dadurch gekennzeichnet, dass eine erste Nockenkontur der zumindest zwei Nockenkonturen der Nocken einen Nullhub und/oder eine zweite Nockenkontur der zumindest zwei Nockenkonturen einen Maximalhub der durch die Nocken betätigten Einlassventile bewirkt, dann lässt sich dies dahingehend als mit Vorteil behaftet betrachten, dass auf eine gestalterisch sinnvolle Weise zwei mögliche Ventilhübe der zu betätigenden Einlassventile realisierbar sind.

Eine weitere sehr viel versprechende Weiterbildung lässt sich auf die Weise ausgestalten, dass zumindest eine weitere, sich von der ersten Nockenkontur und/oder der zweiten Nockenkontur unterscheidende Nockenkontur der zumindest zwei Nockenkonturen der Nocken einen Zwischenhub größer des Nullhubes und kleiner des Maximalhubes der durch die Nocken betätigten Einlassventile bewirkt, wodurch sich im Rahmen einer solchen Ausgestaltung Ventilhübe der durch die Nocken zu betätigenden Einlassventile realisieren ließen, die zu einer Teilöffnung des Füllungskanals oder eines als Füllungskanal ausgebildeten Teiles des Einlasskanals führen. Hierdurch wäre es möglich, den Füllgrad des Brennraums eines jeweiligen Zylinders mit dem Reaktionsgas, beispielsweise in Abhängigkeit des Lastzustandes der Verbrennungskraftmaschine, zu verändern, insbesondere zu steuern oder zu regeln. Dies sollte gewinnbringend zu einer lastabhängigen Reduzierung des Kraftstoffverbrauches sowie des Schadstoffausstoßes der Verbrennungskraftmaschine führen.

Äußerst nutzbringend ist es zudem, wenn die durch den jeweiligen Verwirbelungskanal in den Brennraum eines jeweiligen Zylinders eines Zylinderpaares einströmenden Volumenströme des Reaktionsgases entlang einer Zylinderlängsachse eine Helix-förmige Strömungsrichtung mit einander entgegengesetzter Gängigkeit aufweisen. In den Brennräumen der Zylinder eines Zylinderpaares können somit Volumenströme des Brenngases vorliegen, welche eine entgegengesetzte Drallrichtung aufweisen. Dies hat dahingehend einen Vorteil, dass die Einlasskanäle eines Zylinderpaares spiegelsymmetrisch ausgebildet realisierbar sind, was insbesondere Vorteile hinsichtlich der Strömungsführung im Einlasskanal sowie fertigungstechnisch bedingte Vorteile bietet. Die Gängigkeit der Helix-förmigen Strömungsrichtung lässt sich hierbei in linksgängig sowie rechtsgängig unterteilen.

Ist eine Weiterbildung der Erfindung ferner dahingehend ausgeführt, dass die variablen Einlassventiltriebe der Verbrennungskraftmaschine ausschließlich durch ein Stellglied betätigbar und/oder die Einlassventiltriebe durch einen Koppelmechanismus wirkverbunden sind, so ist denkbar, dass zur Betätigung der den jeweiligen Zylinderpaaren zugeordneten variablen Einlassventiltriebe nicht jeweils ein Stellglied pro Zylinderpaar verwendet werden muss, sondern alle variablen Einlassventiltriebe der Verbrennungskraftmaschine durch lediglich ein Stellglied betätigt werden. Dies verringert unter anderem den Fertigungsaufwand sowie die Herstellungskosten einer solch ausgestalteten Verbrennungskraftmaschine. In einer simplen Ausführungsform könnte der Koppelmechanismus als eine Koppelachse oder Koppelwelle ausgebildet sein, wobei es jedoch zur Generierung unterschiedlicher Steuerzeiten der zu betätigenden Einlassventile als vorteilhaft anzusehen ist, dass der Koppelmechanismus zumindest ein Verzögerungsglied, welches insbesondere ein mechanisches Verzögerungsglied ist, aufweist, über welches ein Vor- und/oder Nacheilen der axialen Verschiebung der Koppelstücke relativ zueinander realisierbar ist.

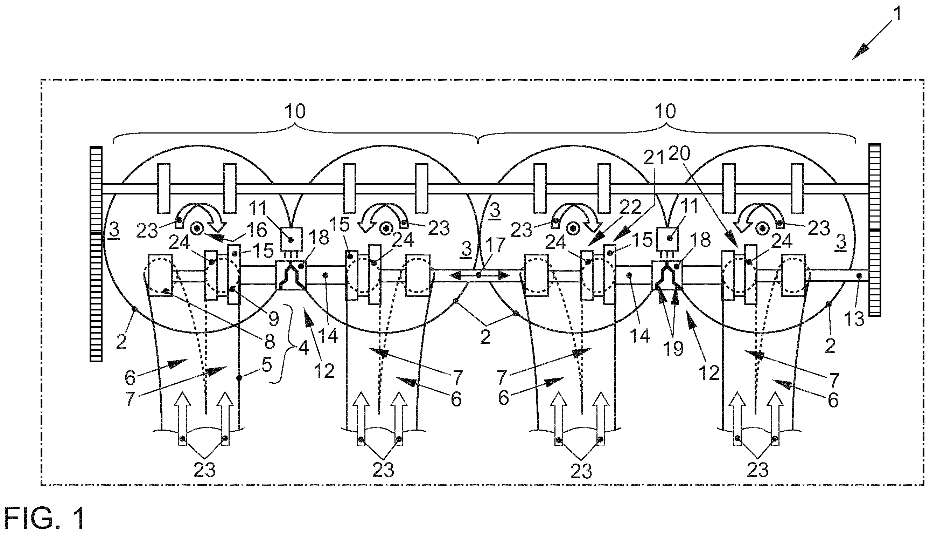

Die Erfindung lässt zahlreiche Ausführungsformen zu. Zur weiteren Verdeutlichung ihres Grundprinzips ist eine davon in der Zeichnung dargestellt und wird nachfolgend beschrieben.

Diese zeigt in der Figur eine erfindungsgemäße Vorrichtung zur Beeinflussung des Strömungsverhaltens eines Reaktionsgases. Dieses wird im Betrieb der in dieser Weiterbildung vier Zylinder 2 aufweisenden Verbrennungskraftmaschine 1 in den Brennraum 3 der Zylinder 2 zugeführt. Hierfür weist jeder der Zylinder 2 die jeweilige Einlasseinrichtung 4 zur Zufuhr des Reaktionsgases auf, wobei der Einlasseinrichtung 4 je ein Einlasskanal 5 sowie zwei am und/oder im jeweiligen Zylinder 2 angeordnete Einlassventile 8, 9 zugeordnet sind. Der Einlasskanal 5 ist zudem in der in der Figur dargestellten Ausführungsform in den Verwirbelungskanal 6 und den Füllungskanal 7 unterteilt, wobei das in dem Füllungskanal 7 angeordnete Einlassventil 9 als das den Füllungskanal 7 vom Brennraum 3 des Zylinders 2 trennende Füllungskanal-Einlassventil 24 ausgebildet ist. Überdies sind je zwei unmittelbar benachbarte Zylinder 2 der Verbrennungskraftmaschine 1 ausschließlich je einem Zylinderpaar 10 zugeordnet. Die Verbrennungskraftmaschine 1 weist nun je Zylinderpaar 10 ein Stellglied 11 sowie einen variablen Einlassventiltrieb 12 auf, welcher durch das Stellglied 11 betätigbar ist. Der jeweilige dem Zylinderpaar 10 zugeordnete variable Einlassventiltrieb 12 dient hierbei der Ventilhub-veränderlichen Betätigung der als Füllungskanal-Einlassventile 24 ausgebildeten Einlassventile 9 im jeweiligen Zylinder 2 des Zylinderpaares 10. Der variable Einlassventiltrieb 12 an sich ist hierbei durch das auf der Einlassnockenwelle 13 drehfest und axialverschieblich angeordnete Nockenstück 14 ausgeformt, wobei ein jeweiliges Nockenstück 14 in dieser Ausführungsform zwei Nocken 15 zum Betätigen der Einlassventile 9 mit drei an den Nocken 15 verschieden und axial aufeinanderfolgend ausgebildeten Nockenkonturen 20, 21, 22 aufweist. Die Verschiebung des Nockenstückes 14 und somit der Nocken 15 in axiale Richtung 17 über das Stellglied 11 erfolgt so, dass die jeweilige der Nockenkonturen 20, 21, 22 des Nockens 15 bei Drehbewegung der Nockenwelle 13 auf die zu betätigenden Einlassventile 9 wirkt, mittels welcher der die durch die Einlassventile 9 auszuführende Ventilhub bewirkt wird. Die Nockenkonturen 20, 21, 22 sind dabei so ausgebildet, dass die erste Nockenkontur 20 einen Nullhub, die zweite Nockenkontur 21 einen Maximalhub und die dritte Nockenkontur 22 einen Zwischenhub größer des Nullhubes und kleiner des Maximalhubes der durch die Nocken 15 betätigten Einlassventile 9 bewirkt. Die durch die Nocken 15 und somit den variablen Einlassventiltrieb 12 betätigten Einlassventile 9 des Zylinderpaares 10 sind hierbei die in und/oder an den Zylindern 2 eines jeweiligen Zylinderpaares 10 einander zugewandt angeordneten Einlassventile 9. Die bereits erwähnte Betätigung des variablen Einlassventiltriebes 12 an sich erfolgt in axiale Richtung 17 der Einlassnockenwelle 13 über das Stellglied 11 durch das Zusammenwirken des Stellgliedes 11 mit der an dem Nockenstück 14 ausgeformten Kulisse 18. Die Kulisse 18 weist hierfür zwei in axiale Richtung 17 der Einlassnockenwelle 13 wirkende Kulissenbahnen 19 auf. Bei verschlossenem Füllungskanal-Einlassventil 24, d. h. bei einem über die Nockenkontur 20 des Nockens 15 bewirkten Nullhub des Füllungskanal-Einlassventils 24 weisen die durch den jeweiligen Verwirbelungskanal 6 in den Brennraum 3 des jeweiligen Zylinders 2 des Zylinderpaares 10 einströmenden Volumenströme des Reaktionsgases aufgrund der spiegelsymmetrischen Ausformung der Einlasseinrichtungen 4 der Zylinder 2 des jeweiligen Zylinderpaares 10 entlang der Zylinderlängsachse 16 eine Helix-förmige Strömungsrichtung 23 mit einander entgegengesetzter Gängigkeit auf. Außerhalb der Zylinder 2 und somit des Brennraumes 3 weisen die Volumenströme des Reaktionsgases bei der Durchströmung des Einlasskanals 5 hingegen eine im Wesentlichen geradlinige Strömungsrichtung 23 auf.

### Bezugszeichenliste

- 1: Verbrennungskraftmaschine
- 2: Zylinder
- 3: Brennraum
- 4: Einlasseinrichtung
- 5: Einlasskanal

- 6: Verwirbelungskanal
- 7: Füllungskanal
- 8: Einlassventil
- 9: Einlassventil
- 10: Zylinderpaar

- 11: Stellglied
- 12: Einlassventiltrieb
- 13: Einlassnockenwelle
- 14: Nockenstück
- 15: Nocken

- 16: Zylinderlängsachse
- 17: Axiale Richtung
- 18: Kulisse
- 19: Kulissenbahn
- 20, 21, 22: Nockenkontur

- 23: Strömungsrichtung
- 24: Füllungskanal-Einlassventil

## Patentansprüche

1. Verbrennungskraftmaschine (1) mit einer Vorrichtung zur Beeinflussung des Strömungsverhaltens eines Reaktionsgases, welches im Betrieb der zumindest zwei Zylinder (2) aufweisenden Verbrennungskraftmaschine (1) in einen Brennraum (3) der Zylinder (2) zuführbar ist und hierbei jeder der Zylinder (2) eine Einlasseinrichtung (4) zur Zufuhr des Reaktionsgases aufweist, welcher mindestens ein in zumindest einen Verwirbelungskanal (6) und einen Füllungskanal (7) unterteilbarer Einlasskanal (5) sowie zumindest zwei am und/oder im jeweiligen Zylinder (2) angeordnete Einlassventile (8, 9) zugeordnet sind, dadurch gekenzeichnet, dass je zwei unmittelbar benachbarte Zylinder (2) der Verbrennungskraftmaschine (1) ausschließlich einem Zylinderpaar (10) zugeordnet sind, sodass ein einem Zylinderpaar (10) zugeordneter Zylinder (2) keinem weiteren Zylinderpaar (10) zugeordnet ist, wobei die Verbrennungskraftmaschine (1) je Zylinderpaar (10) einen durch höchstens ein Stellglied (11) betätigbaren, variablen Einlassventiltrieb (12) aufweist, wobei der variable Einlassventiltrieb (12) durch ein auf einer Einlassnockenwelle (13) drehfest und axialverschieblich angeordnetes Nockenstück (14) ausgeformt ist, wobei das Nockenstück (14) zumindest zwei Nocken (15) zum Betätigen der Einlassventile (8, 9) mit zumindest zwei verschiedenen und axial aufeinanderfolgend ausgebildeten Nockenkonturen (20, 21, 22) aufweist, und die Betätigung des variablen Einlassventiltriebes (12) in axiale Richtung (17) der Einlassnockenwelle (13) mittels des Stellgliedes (11) durch Zusammenwirken des Stellgliedes (11) mit einer an dem Nockenstück (14) ausgeformten Kulisse (18), aufweisend zumindest eine in axiale Richtung (17) der Einlassnockenwelle (13) wirkende Kulissenbahn (19), ausführbar ist, wobei durch den variablen Einlassventiltrieb (12) je genau ein Einlassventil (9) der Einlassventile (8, 9) pro Zylinder (2) des Zylinderpaares (10) Ventilhub-veränderlich betätigbar ist, wobei die durch den variablen Einlassventiltrieb (12) betätigten Einlassventile (9) im Füllungskanal (7) angeordnet und als den Füllungskanal (7) vom Brennraum (3) des Zylinders (2) trennende Füllungskanal-Einlassventile (20) ausgebildet sind.

2. Verbrennungskraftmaschine (1) nach zumindest einem der vorangehenden Ansprüche, **dadurch gekennzeichnet, dass** bei einer ungeraden Anzahl an Zylindern (2) der Verbrennungskraftmaschine (1) die Verbrennungskraftmaschine (1) für den keinem Zylinderpaar (10) zuordenbaren Zylinder (2) einen durch höchstens ein Stellglied (11) betätigbaren, variablen Einlassventiltrieb (12) aufweist, durch welchen ein Einlassventil (9) des dem keinen Zylinderpaar (10) zuordenbaren Zylinders (2) Ventilhub-veränderlich betätigbar ist.

3. Verbrennungskraftmaschine (1) nach zumindest einem der vorangehenden Ansprüche, **dadurch gekennzeichnet, dass** die durch den variablen Einlassventiltrieb (12) betätigten Einlassventile (8, 9) des Zylinderpaares (10) die in und/oder an den Zylindern (2) einander zugewandt angeordneten Einlassventile (9) sind.

4. Verbrennungskraftmaschine (1) nach zumindest einem der vorangehenden Ansprüche, **dadurch gekennzeichnet, dass** eine erste Nockenkontur (20) der zumindest zwei Nockenkonturen (20, 21, 22) der Nocken (15) einen Nullhub und/oder eine zweite Nockenkontur (21) der zumindest zwei Nockenkonturen (20, 21, 22) einen Maximalhub der durch die Nocken (15) betätigten Einlassventile (8, 9) bewirkt.

5. Verbrennungskraftmaschine (1) nach Anspruch 4, **dadurch gekennzeichnet, dass** zumindest eine weitere, sich von der ersten Nockenkontur (20) und/oder der zweiten Nockenkontur (21) unterscheidende Nockenkontur (22) der zumindest zwei Nockenkonturen (20, 21, 22) der Nocken (15) einen Zwischenhub größer des Nullhubes und kleiner des Maximalhubes der durch die Nocken (15) betätigten Einlassventile (8, 9) bewirkt.

6. Verbrennungskraftmaschine (1) nach zumindest einem der vorangehenden Ansprüche, **dadurch gekennzeichnet, dass** die durch den jeweiligen Verwirbelungskanal (6) in den Brennraum (3) eines jeweiligen Zylinders (2) eines Zylinderpaares (10) einströmenden Volumenströme des Reaktionsgases entlang einer Zylinderlängsachse (16) eine Helix-förmige Strömungsrichtung (23) mit einander entgegengesetzter Gängigkeit aufweisen.

7. Verbrennungskraftmaschine (1) nach zumindest einem der vorangehenden Ansprüche, **dadurch gekennzeichnet, dass** die variablen Einlassventiltriebe durch einen Koppelmechanismus wirkverbunden sind.

## Claims

1. Internal combustion engine (1) having an apparatus for influencing the flow behaviour of a reaction gas which, during the operation of the internal combustion engine (1), which has at least two cylinders (2), can be fed into a combustion chamber (3) of the cylinders (2), and here each of the cylinders (2) has an inlet device (4) for the feed of the reaction gas, which inlet devices are assigned at least one inlet channel (5), which can be divided into at least one swirling channel (6) and one filling channel (7), and at least two inlet valves (8, 9) which are arranged at and/or in the respective cylinder (2), **characterized in that** in each case two directly adjacent cylinders (2) of the internal combustion engine (1) are assigned exclusively to one cylinder pair (10), such that a cylinder (2) assigned to one cylinder pair (10) is not assigned to any other cylinder pair (10), wherein the internal combustion engine (1) has, for each cylinder pair (10), a variable inlet valve drive (12) which is actuatable by means of at most one actuating element (11), wherein the variable inlet valve drive (12) is formed by a cam piece (14) which is arranged rotationally conjointly and axially displaceably on an inlet camshaft (13), wherein the cam piece (14) has at least two cams (15) for actuating the inlet valves (8, 9) with at least two different cam contours (20, 21, 22) formed axially in succession, and the actuation of the variable inlet valve drive (12) in an axial direction (17) of the inlet camshaft (13) can be performed by means of the actuating element (11) by interaction of the actuating element (11) with a slotted guide (18) formed on the cam piece (14), having at least one slotted-guide track (19) which acts in an axial direction (17) of the inlet camshaft (13), wherein, by means of the variable inlet valve drive (12), in each case exactly one inlet valve (9) of the inlet valves (8, 9) per cylinder (2) of the cylinder pair (10) can be actuated in a variable manner in terms of valve lift, wherein the inlet valves (9) actuated by means of the variable inlet valve drive (12) are arranged in the filling channel (7) and are formed as filling channel inlet valves (20) which separate the filling channel (7) from the combustion chamber (3) of the cylinder (2).

2. Internal combustion engine (1) according to at least one of the preceding claims, **characterized in that**, in the case of an uneven number of cylinders (2) of the internal combustion engine (1), the internal combustion engine (1) has, for the cylinder (2) which cannot be assigned to any cylinder pair (10), a variable inlet valve drive (12) which is actuatable by means of at most one actuating element (11) and by means of which an inlet valve (9) of the cylinder (2) which cannot be assigned to any cylinder pair (10) can be actuated in a variable manner in terms of valve lift.

3. Internal combustion engine (1) according to at least one of the preceding claims, **characterized in that** the inlet valves (8, 9), actuated by means of the variable inlet valve drive (12), of the cylinder pair (10) are the inlet valves (9) arranged facing towards one another in and/or at the cylinders (2).

4. Internal combustion engine (1) according to at least one of the preceding claims, **characterized in that** a first cam contour (20) of the at least two cam contours (20, 21, 22) of the cams (15) effects a zero lift and/or a second cam contour (21) of the at least two cam contours (20, 21, 22) effects a maximum lift of the inlet valves (8, 9) actuated by the cams (15).

5. Internal combustion engine (1) according to Claim 4, **characterized in that** at least one further cam contour (22), which differs from the first cam contour (20) and/or the second cam contour (21), of the at least two cam contours (20, 21, 22) of the cams (15) effects an intermediate lift greater than the zero lift and smaller than the maximum lift of the inlet valves (8, 9) actuated by the cams (15).

6. Internal combustion engine (1) according to at least one of the preceding claims, **characterized in that** the volume flows of the reaction gas flowing into the combustion chamber (3) of a respective cylinder (2) of a cylinder pair (10) through the respective swirling channel (6) have, along a cylinder longitudinal axis (16), a helical flow direction (23) with mutually opposite spiral directions.

7. Internal combustion engine (1) according to at least one of the preceding claims, **characterized in that** the variable inlet valve drives are operatively connected by means of a coupling mechanism.

## Revendications

1. Moteur à combustion interne (1), comprenant un dispositif pour influencer le comportement d'écoulement d'un gaz de réaction pouvant être amené, en cours de fonctionnement du moteur à combustion interne (1) comportant au moins deux cylindres (2), dans une chambre de combustion (3) des cylindres (2), et chacun des cylindres (2) comportant alors un dispositif d'admission (4) pour amener le gaz de réaction, auquel sont attribués au moins un canal d'admission (5) pouvant être divisé en au moins un canal de tourbillonnement (6) et un canal de remplissage (7), ainsi qu'au moins deux soupapes d'admission (8, 9) disposées sur et/ou dans le cylindre respectif (2), **caractérisé en ce que** respectivement deux cylindres (2) directement adjacents du moteur à combustion interne (1) sont attribués à une seule paire de cylindres (10) de sorte qu'un cylindre (2) attribué à une paire de cylindres (10) n'est attribué à aucune autre paire de cylindres (10), dans lequel le moteur à combustion interne (1) comporte pour chaque paire de cylindres (10) une commande de soupape d'admission variable (12), pouvant être actionnée par au maximum un actionneur (11), la commande de soupape d'admission variable (12) étant configurée par un jeu de cames (14) disposé de manière verrouillée en rotation et axialement mobile sur un arbre à cames d'admission (13), dans lequel le jeu de cames (14) comporte au moins deux cames (15) pour actionner les soupapes d'admission (8, 9) avec au moins deux contours de came (20, 21, 22) différentes, réalisées axialement les unes après les autres, et l'actionnement de la commande de soupape d'admission variable (12) dans la direction axiale (17) de l'arbre à cames d'admission (13) est réalisable au moyen de l'actionneur (11) **en ce que** l'actionneur (11) coopère avec une coulisse (18) configurée sur le jeu de cames (14), comportant au moins un guidage de coulisse (19) agissant au moins dans une direction axiale (17) de l'arbre à cames d'admission (13), dans lequel la commande de soupape d'admission variable (12) permet d'actionner avec variation de la levée de soupape exactement une soupape d'admission (9) respectivement des soupapes d'admission (8, 9) par cylindre (2) de la paire de cylindres (10), dans lequel les soupapes d'admission (9) actionnées par la commande de soupape d'admission variable (12) sont disposées dans le canal de remplissage (7) et réalisées comme des soupapes d'admission de canal de remplissage (20) séparant le canal de remplissage (7) de la chambre de combustion (3) du cylindre (2).

2. Moteur à combustion interne (1) selon au moins l'une des revendications précédentes, **caractérisé en ce que** pour un nombre impair de cylindres (2) du moteur à combustion interne (1), le moteur à combustion interne (1) comporte pour le cylindre (2) ne pouvant être attribué à aucune paire de cylindres (10) une commande de soupape d'admission variable (12) pouvant être actionnée par au maximum un actionneur (11) et permettant d'actionner avec variation de la levée de soupape une soupape d'admission (9) du cylindre (2) ne pouvant être attribué à aucune paire de cylindres (10).

3. Moteur à combustion interne (1) selon au moins l'une des revendications précédentes, **caractérisé en ce que** les soupapes d'admission (8, 9) de la paire de cylindres (10), actionnées par la commande de soupape d'admission variable (12) sont les soupapes d'admission (9) disposées face à face dans et/ou sur les cylindres (2) .

4. Moteur à combustion interne (1) selon au moins l'une des revendications précédentes, **caractérisé en ce qu'**un premier contour de came (20) des au moins deux contours de came (20, 21, 22) des cames (15) provoque une course zéro et/ou un deuxième contour de came (21) des au moins deux contours de came (20, 21, 22) provoque une course maximale des soupapes d'admission (8, 9) actionnées par les cames (15).

5. Moteur à combustion interne (1) selon la revendication 4, **caractérisé en ce qu'**au moins un contour de came (22) supplémentaire des au moins deux contours de cames (20, 21, 22) des cames (15), différent du premier contour de came (20) et/ou du deuxième contour de came (21), provoque une course intermédiaire supérieure à la course zéro et inférieure à la course maximale des soupapes d'amission (8, 9) actionnées par les cames (15).

6. Moteur à combustion interne (1) selon au moins l'une des revendications précédentes, **caractérisé en ce que** les débits volumétriques du gaz de réaction entrant dans la chambre de combustion (3) d'un cylindre (2) respectif de la paire de cylindres (10) par le canal de tourbillonnement (6) respectif présentent le long d'un axe longitudinal de cylindre (16) une direction d'écoulement hélicoïdale (23) avec un sens mutuellement opposé.

7. Moteur à combustion interne (1) selon au moins l'une des revendications précédentes, **caractérisé en ce que** les commandes de soupape d'admission variable se trouvent en liaison active par l'intermédiaire d'un mécanisme d'accouplement.
